# EUROPEAN PATENT APPLICATION

(11) **EP 2 522 490 A2**
(43) Date of publication of application: **14.11.2012**
(21) Application number: 12167446.9
(22) Date of filing: 10.05.2012
(51) Int. Cl.: B29C 65/02, B29C 65/08, B65B 51/22, B29C 65/16

(54) **Form-fill-seal machine**

(30) Priority: 11.05.2011 JP 2011106072
(71) Applicant: ISHIDA CO., Ltd., Kyoto-shi, Kyoto 606 (JP)
(72) Inventor: Kamigaito, Satoru, Omihachiman-shi, Shiga 523-0892 (JP); Miyamoto, Hideshi, Ritto-shi, Shiga 520-3026 (JP)
(74) Representative: Hards, Andrew

(57) **Abstract**

A form-fill-seal machine (1) has a forming structure, a vertical seal structure, and a clamp fixing mechanism (18). The forming structure has a support frame (33), a tube (31), a sailor collar-shaped unit (32), and an anvil (51). The tube (31) is fixed to the support frame (33). The sailor collar-shaped unit (32) is fixed to the support frame (33), and wraps a sheet-shaped film around the tube (31) so that two ends thereof overlap. The anvil (51) is fixed to the tube (31). The vertical seal structure has an oscillator (50). The oscillator (50) generates ultrasonic waves in order to seal overlapping portions of two ends of the film, being conveyed through the intervening gap with the anvil (51), in a vertical direction. The clamp fixing mechanism (18) fixes the forming structure and the vertical seal structure in fixed positions relative to one another.

## Description

### TECHNICAL FIELD

The present invention relates to a form-fill-seal machine for creating an ultrasonic seal in a vertical direction at overlapping portions of a cylindrical packaging material.

### BACKGROUND ART

Conventionally, there exists a form-fill-seal machine for creating an ultrasonic seal in a vertical direction at overlapping portions of a cylindrical packaging material (for example, see JP-A No. 2009-280258). The mechanism for creating the ultrasonic seal normally has an oscillator and an anvil. The anvil is disposed in a position opposing the oscillator.

### SUMMARY OF INVENTION

### Technical Problem

In order to properly form the ultrasonic seal, the relative positions of the oscillator and the anvil must be properly maintained while the form-fill-seal machine is in operation. However, the oscillation of the oscillator, which generates ultrasonic waves, affects the relative positions of the oscillator and the anvil.

An object of the present invention is to provide a form-fill-seal machine capable of properly maintaining the relative positions of the oscillator and the anvil.

### Solution to Problem

The problem above-mentioned is solved by a form-fill-seal machine according to claim 1 of the present invention. Further advantageous effect can be achieved by embodiments defined by dependent claims. A form-fill-seal machine according to a first preferred embodiment of the present invention has a first structure, a second structure, and a first fixing mechanism. The first structure has a support frame, a cylindrical part, a sailor collar-shaped unit, and a packaging-material-receiving unit. The cylindrical part is fixed to the support frame. The sailor collar-shaped unit wraps a sheet-shaped packaging material on the cylindrical part so that two edges thereof overlap defining overlapping portions, the sailor collar-shaped unit being fixed to the support frame. The packaging-material-receiving unit is fixed to the cylindrical part. The second structure has an energy supply unit. The energy supply unit imparts oscillatory, thermal, or light energy to the overlapping portions of the packaging material conveyed through a space bounded on one side by the packaging-material-receiving unit in order to seal the overlapping portions in a vertical direction. The first fixing mechanism releasably couples the first structure to the second structure in fixed positions relative to one another.

The first fixing mechanism fixes the first structure having the packaging-material-receiving unit and the second structure having the energy supply unit in fixed positions relative to one another. The relative positions of the packaging-material-receiving unit and the energy supply unit are therefore properly maintained.

A form-fill-seal machine according to a second preferred embodiment of the present invention is the form-fill-seal machine wherein the packaging-material-receiving unit includes an anvil. The energy supply unit is an oscillator that generates ultrasonic waves.

The first fixing mechanism fixes the first structure having the anvil and the second structure having the oscillator in the fixed positions relative to one another. The relative positions of the oscillator and the anvil are therefore properly maintained.

A form-fill-seal machine according to a third preferred embodiment of the present invention is the form-fill-seal machine further having a body frame and a second fixing mechanism. The second fixing mechanism fixes the second structure to the body frame.

The second fixing mechanism fixes the second structure having the oscillator to the body frame. The first fixing mechanism reinforces the fixing of the relative positions of the first structure and the second structure effected by the second fixing mechanism. The relative positions of the oscillator and the anvil are therefore more properly maintained.

A form-fill-seal machine according to a fourth preferred embodiment of the present invention is the form-fill-seal machine wherein the oscillator is capable of moving in a direction toward the anvil in a state where the first structure and the second structure are coupled in the fixed positions by the first fixing mechanism.

Changes in the relative positions of the oscillator and the anvil are permissible with respect to the direction from the oscillator substantially toward the anvil.

A form-fill-seal machine according to a fifth preferred embodiment of the present invention is the form-fill-seal machine wherein the oscillator is fixed with respect to a direction other than the direction from the oscillator substantially toward the anvil in a state where the first structure and the second structure are coupled in the fixed positions by the first fixing mechanism.

The relative positions of the oscillator and the anvil are properly fixed with respect to the direction other than the direction from the oscillator substantially toward the anvil.

A form-fill-seal machine according to a sixth preferred embodiment of the present invention is the form-fill-seal machine wherein the first fixing mechanism has a fixing implement. The fixing implement is connected to at least one of the first structure and the second structure.

A fixing implement may be disposed on both the first structure and the second structure, or on only one of the two. The fixing implement is, for example, a hook. An example of a manner in which a fixing implement is disposed on only one of the first structure or the second structure is a hook disposed on only one structure and configured to catch onto a predetermined location on the other structure.

A form-fill-seal machine according to a seventh preferred embodiment of the present invention is the form-fill-seal machine wherein the packaging-material-receiving unit is a heat resistant member. The energy supply unit is a heater for heating the overlapping portions of the packaging material.

The first fixing mechanism fixes the first structure having the packaging-material-receiving unit and the second structure having the heater in the fixed positions. The relative positions of the packaging-material-receiving unit and the heater are therefore properly maintained.

A form-fill-seal machine according to an eighth preferred embodiment of the present invention is the form-fill-seal machine wherein the packaging-material-receiving unit is a heat resistant member. The energy supply unit has a laser irradiator for irradiating the overlapping portions of the packaging material using a laser.

The first fixing mechanism fixes the first structure having the packaging-material-receiving unit and the second structure having the laser irradiator in the fixed positions. The relative positions of the packaging-material-receiving unit and the laser irradiator are therefore properly maintained.

### Advantageous Effects of Invention

The first fixing mechanism fixes the first structure having the packaging-material-receiving unit and the second structure having the energy supply unit in the fixed positions. The relative positions of the packaging-material-receiving unit and the energy supply unit are therefore properly maintained.

### BRIEF DESCRIPTION OF THE DRAWINGS

FIG. 1 is a perspective view of one embodiment of a form-fill-seal machine.

FIG. 2 is a right side view of a form-fill-seal machine.

FIG. 3 is a perspective view of a form-fill-seal unit.

FIG. 4 is a block diagram of a control system for a form-fill-seal machine.

FIG. 5 is an external view of a pillow-shaped bag.

FIG. 6A is a perspective view of a form-fill-seal unit seen from a front right upper side with a clamp fixing mechanism in a clamped orientation.

FIG. 6B is a perspective view of a form-fill-seal unit seen from the front right upper side with the clamp fixing mechanism in an unclamped orientation

FIG. 7 is a perspective view of a form-fill-seal unit seen from a rear right side.

FIG. 8 is a perspective view of a form-fill-seal unit seen from a front right side.

FIG. 9 is a perspective view of the periphery of an anvil seen from a front right side.

FIG. 10 is a front view of a roller.

### DESCRIPTION OF EMBODIMENTS

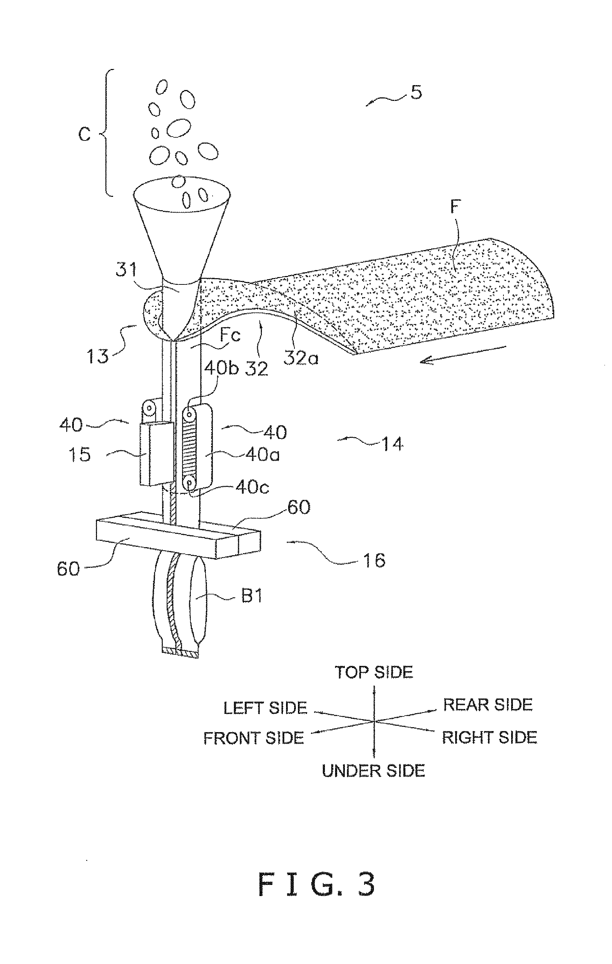

Hereafter follows a description of a form-fill-seal machine 1 according to one embodiment of the present invention with reference to the drawings. In describing the form-fill-seal machine 1, the terms "front (head-on)," "rear (back)," "up," "down," "left," and "right" shall be defined as shown in FIG. 3. "Upstream" and "downstream" shall be based on the direction in which a film F is conveyed.

### (1) Overall configuration

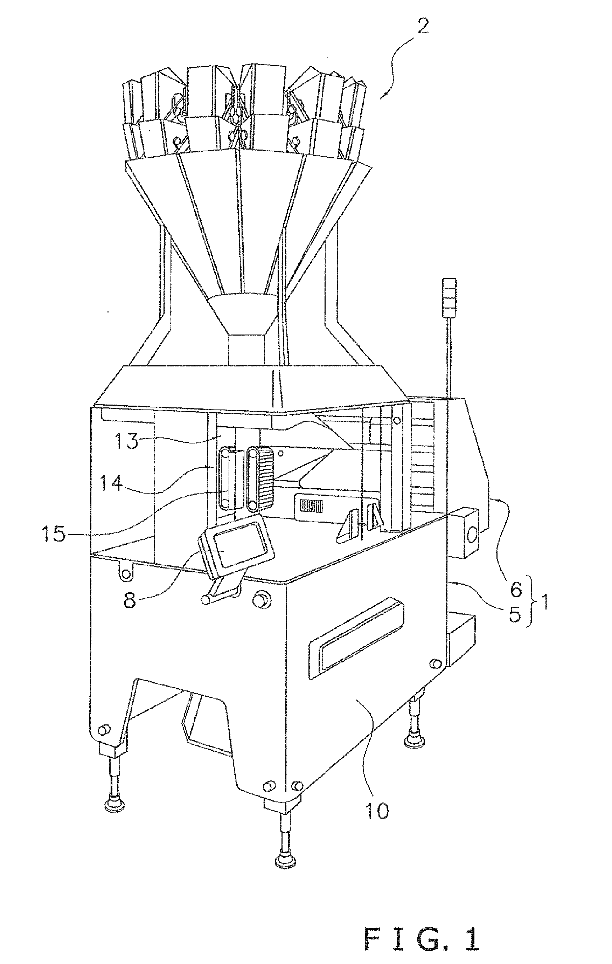

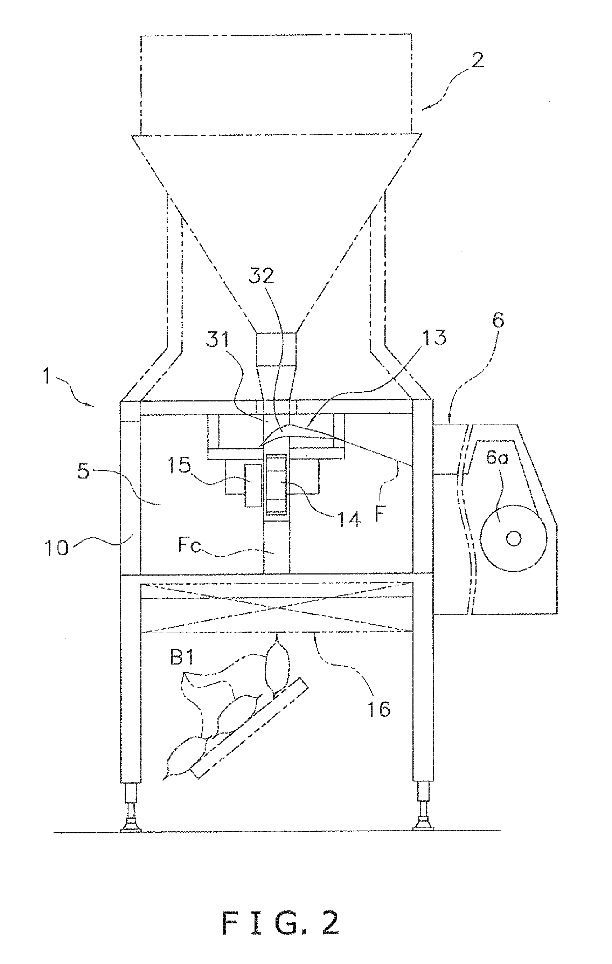

The form-fill-seal machine 1 is a machine for manufacturing a product comprising contents C, such as a snack food, sealed within a bag. As shown in FIGS. 1 through 4, the form-fill-seal machine 1 has a bag-making packaging unit 5 for bagging the contents C, a film supply unit 6 for supplying a film F forming the material for the bag portion of the product to the bag-making packaging unit 5, a controller 7 for controlling the overall operation of the form-fill-seal machine 1, and a body frame 10 for directly or indirectly supporting units 5, 6, and 7. The contents C bagged by the bag-making packaging unit 5 are weighed by a combination scale 2 disposed above the bag-making packaging unit 5. The bag-making packaging unit 5 bags the contents C in harmony with the timing at which the contents C are supplied from the combination scale 2.

An operation panel 8 is disposed on the front of the bag-making packaging unit 5 facing to the right. The operation panel 8 has an LCD and a touchscreen covering the LCD. The operation panel 8 displays information regarding the operating status of the form-fill-seal machine 1 to an operator, and accepts various settings inputted to the form-fill-seal machine 1.

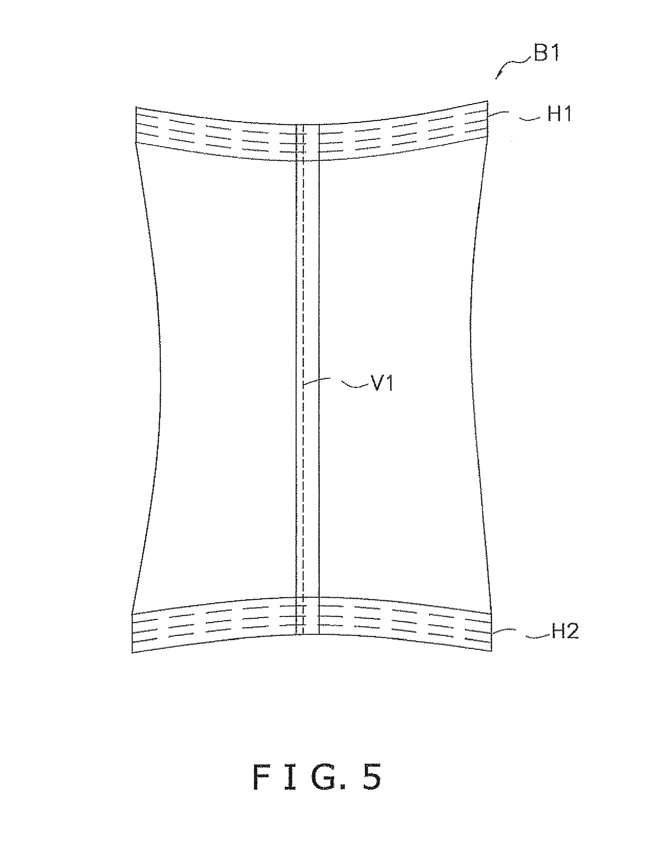

The form-fill-seal machine 1 manufactures a pillow-shaped bag B1 (hereafter, "pillow bag B1") as shown in FIG. 5. A vertical seal section V1 extending in the vertical direction and horizontal seal sections H1, H2 extending in the horizontal direction are formed on the pillow bag B1. The vertical seal section V1 and the horizontal seal sections H1, H2 are formed by ultrasonic sealing.

### (2) Detailed configuration

### (2-1) Film supply unit

The film supply unit 6 supplies a sheet-shaped film F that constitutes the material for the pillow bag B1 to the bag-making packaging unit 5. The film supply unit 6 has a film roll 6a around which the sheet-shaped film F is wrapped. The controller 7 reels out film F from the film roll 6a while synchronizing with the operation of the bag-making packaging unit 5.

The rotational axis of the film roll 6a is driven by a motor not shown in the drawings. Conveying force is applied to the film F by pulldown belt mechanisms 40, 40 described below. The drive speed of the film roll 6a and the pulldown belt mechanisms 40, 40 is controlled by the controller 7.

### (2-2) Bag-making packaging unit

The bag-making packaging unit 5 has a shaping mechanism 13, a conveyor mechanism 14, a vertical sealing mechanism 15, a horizontal sealing mechanism 16, a hinge fixing mechanism 17, and a clamp fixing mechanism 18. The shaping mechanism 13 shapes the sheet-shaped film F conveyed from the film roll 6a into a cylindrical shape. The conveyor mechanism 14 conveys the film F downward after the film F is shaped into a cylindrical shape by the shaping mechanism 13 (the film so shaped will be referred to hereafter as "cylindrical film Fc"). The vertical sealing mechanism 15 ultrasonically seals the overlapping portions of the cylindrical film Fc in the vertical direction (longitudinal direction) and forms the vertical seal section V1. The overlapping portions of the cylindrical film Fc are the portions of the two ends of the sheet-shaped film Fc overlapping in the vertical direction. The horizontal sealing mechanism 16 ultrasonically seals predetermined portions of the cylindrical film Fc in the horizontal direction (horizontal direction) and forms the horizontal seal sections H1, H2. The hinge fixing mechanism 17 fixes a primary part of the vertical sealing mechanism 15 to the body frame 10. The clamp fixing mechanism 18 couples a primary part of the vertical sealing mechanism 15 and the shaping mechanism 13 in fixed positions relative to one another, such that the vertical sealing mechanism 15 is aligned with a portion of the shaping mechanism 13, as described below.

### (2-2-1) Shaping mechanism

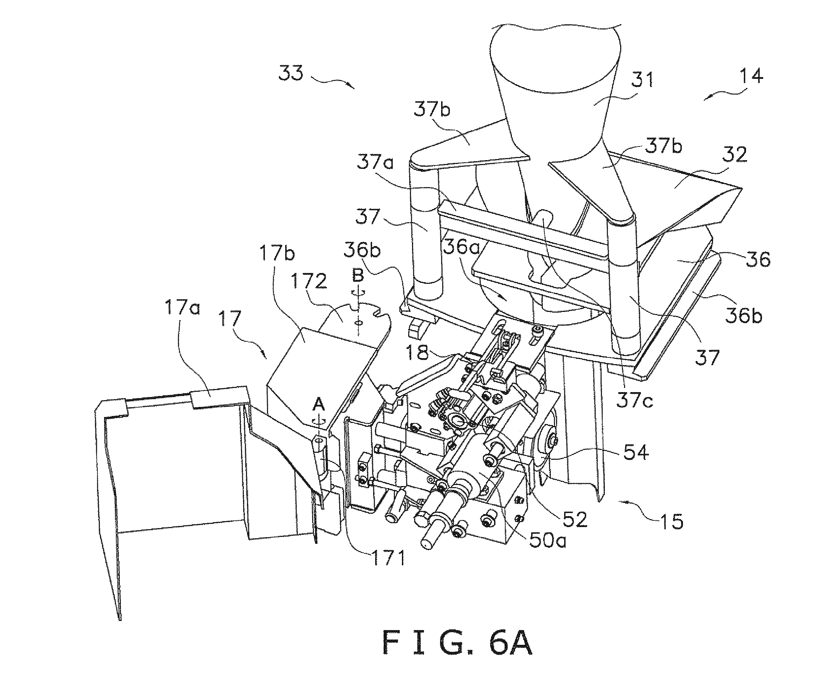

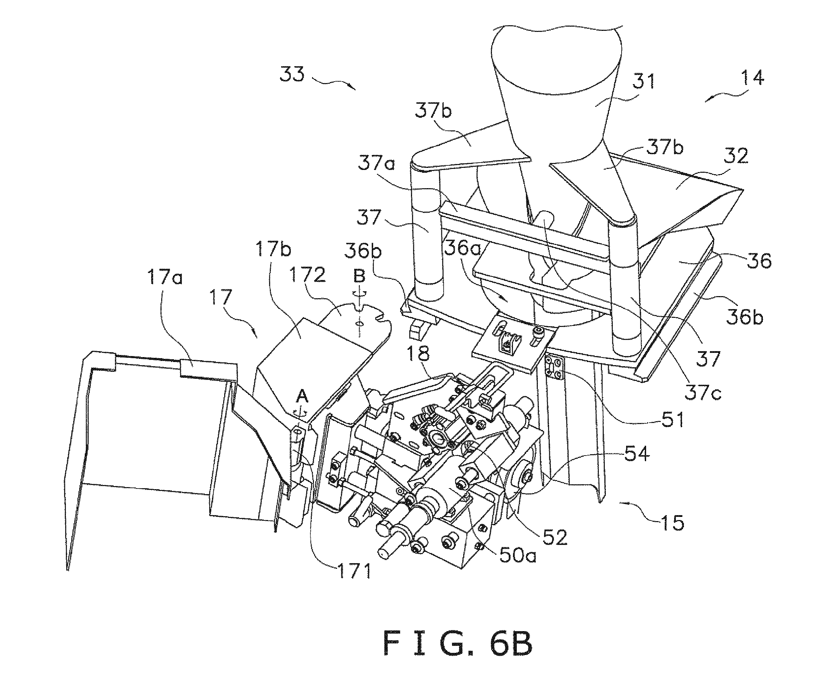

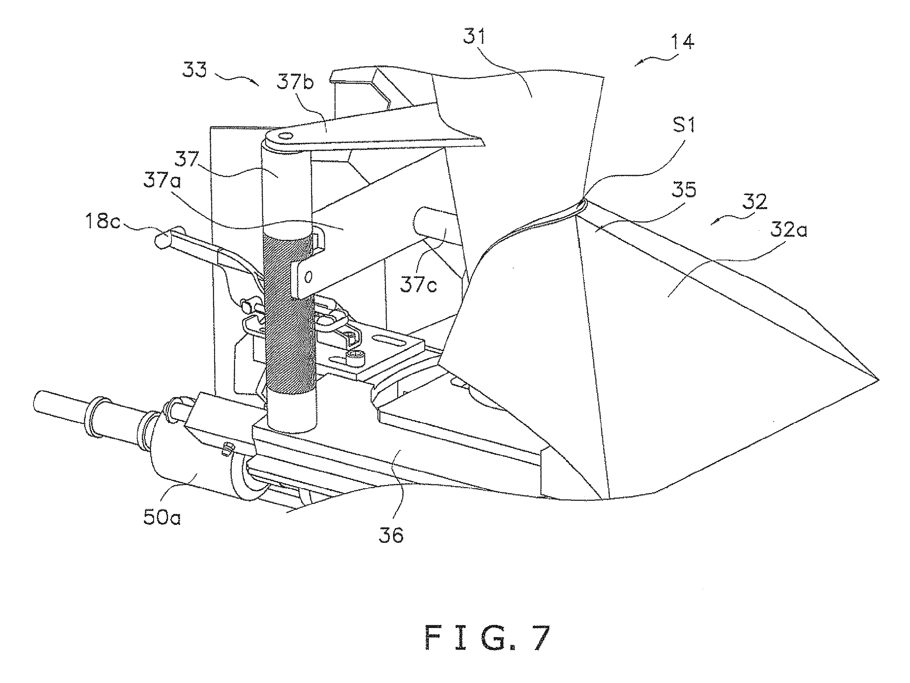

As shown in FIGS. 6A and 6B, and FIG. 7, the shaping mechanism 13 has a tube 31, a sailor collar-shaped unit 32, and a support frame 33. The support frame 33 directly supports the tube 31 and the sailor collar-shaped unit 32.

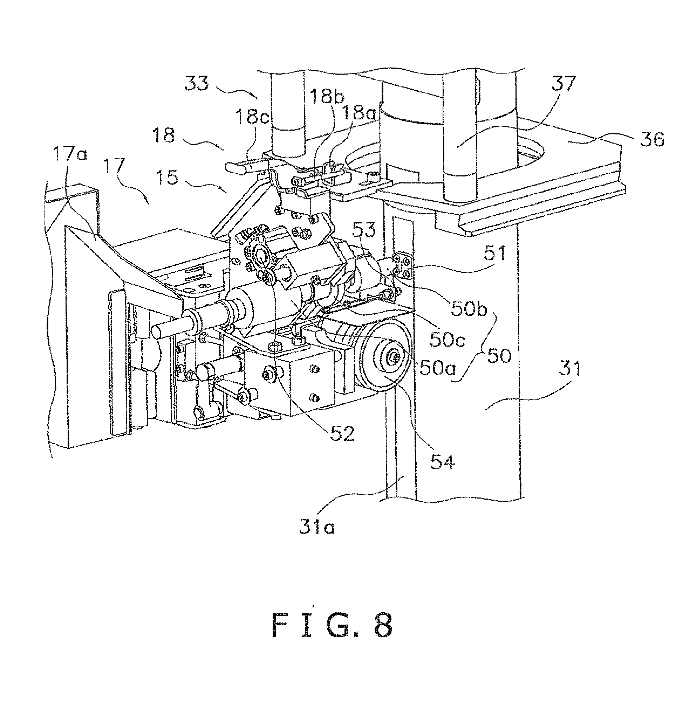

The tube 31 is a substantially cylindrical part extending in a substantially vertical direction, and a flat surface 31a is partially formed on a front side thereof (see FIG. 8). The flat surface 31a extends in a substantially perpendicular direction. The tube 31 has openings on upper and lower ends thereof. The upper part of the tube 31 has a funnel shape. As shown in FIG. 3, predetermined amounts of the contents C falling down from the combination scale 2 (see FIG. 1) fall into the upper opening of the tube 31 into the interior of the tube 31, and fall through the interior of the tube 31. The combination scale 2 has a feeder, a pooling hopper, a weighing hopper, and a collecting/dispensing chute.

The sailor collar-shaped unit 32 is disposed so as to surround the tube 31. The sailor collar-shaped unit 32 guides the sheet-shaped film F so that the film F wraps around the tube 31. The sailor collar-shaped unit 32 has a sloped surface 32a. The sheet-shaped film F reeled out from the film roll 6a is conveyed diagonally upward along the sloped surface 32a in contact with the sloped surface 32a.

As shown in FIG. 7, a narrow gap S1 is formed between the outer surface of the tube 31 and the sailor collar-shaped unit 32. The gap S1 is present along the entire periphery of the tube 31. After climbing to the top of the sloped surface 32a, the film F enters the gap S1. While passing through the gap S1, the film F is wrapped around the outer surface of the tube 31. The shape of the film F is thereby changed from that of a sheet to that of a cylinder. After the sheet-shaped film F is shaped into a cylindrical shape, the left edge and the right edge of the film F overlap. Afterward, the cylindrical film Fc is conveyed downward along the outer surface of the tube 31 while enveloping the tube 31.

The section of the sailor collar-shaped unit 32 near the apex of the sloped surface 32a is referred to as folding-back section 35. The folding-back section 35 is present along the entire periphery of the tube 31. After proceeding along the sloped surface 32a, the film F is abruptly folded back in a substantially perpendicular downward direction by the folding-back section 35. In other words, the folding-back section 35 abruptly changes the advancing direction of the film F to a substantially perpendicular downward direction near the apex of the sloped surface 32a. After being abruptly folded back by the folding-back section 35, the film F immediately enters the gap S1. The width of the gap S1 is narrow enough that the film F is firmly wrapped around the tube 31. Thus, the load (friction) applied to the film F near the folding-back section 35 is relatively great.

As shown in FIG. 6A, the support frame 33 has a plate member 36, a pair of left and right handles 37, 37, a crossbar 37a, and a pair of left and right crossbars 37b, 37b, and a crossbar 37c. The plate member 36, handles 37, 37 and crossbars 37a, 37b, 37b, and 37c are properly fixed, and the relative positions thereof to each other are constant.

The plate member 36 is a member that is substantially rectangular as viewed from overhead. In the center of the plate member 36 is formed an opening 36a that is substantially circular as viewed from overhead. The tube 31 is disposed so as to vertically penetrate the opening 36a. The handles 37, 37 are disposed so as to extend upward from the vicinities of left and right portions of the front surface of the plate member 36. The crossbar 37a is laid across a substantially central gap between the handles 37, 37. The crossbars 37b, 37b are laid between upper ends of the handles 37, 37 and the tube 31. The crossbar 37c is laid between the center of the crossbar 37a and the tube 31. The tube 31 is fixed to the crossbars 37b, 37b, and 37c. The tube 31 is thereby fixed to the support frame 33.

While not shown in the drawing, the sailor collar-shaped unit 32 is also fixed to the support frame 33. The relative positions of the tube 31 and the sailor collar-shaped unit 32 are thereby fixed with the support frame 33 therebetween.

On the right and left of the plate member 36 are formed sliding rails 36b, 36b extending forward and backward, as shown in FIGS. 6A and 6B. The sliding rails 36b, 36b bear a shaft extending forward and backward and forming a part of the body frame 10 so as to be capable of sliding forward and backward. A user standing in front of the form-fill-seal machine 1 can exchange the entire shaping mechanism 13 by grasping the handles 37, 37 and sliding the shaft of the body frame 10 along the sliding rails 36b, 36b. The shapes and sizes of the tube 31 and the sailor collar-shaped unit 32 differ according to the shape and size of the bag being manufactured. The user can easily attach a shaping mechanism 13 corresponding to the bag being manufactured to the form-fill-seal machine 1.

### (2-2-2) Conveyor mechanism

The conveyor mechanism 14 has a pair of left and right pulldown belt mechanisms 40, 40. As shown in FIG. 3, the pulldown belt mechanisms 40, 40 are disposed symmetrically to the left and right of the tube 31. Each of the pulldown belt mechanisms 40, 40 extend in the vertical direction along the tube 31.

Each of the pulldown belt mechanisms 40, 40 has respective drive rollers 40b, 40b; driven rollers 40c, 40c; and belts 40a, 40a. The drive rollers 40b, 40b are driven by a motor not shown in the drawings. Each of the driven rollers 40c, 40c rotates in response to the rotation of the drive rollers 40b, 40b. The belts 40a, 40a exert suction upon the cylindrical film Fc. The pulldown belt mechanisms 40, 40 thereby convey the cylindrical film Fc downward along the outer surface of the tube 31 while exerting suction thereupon.

### (2-2-3) Vertical sealing mechanism

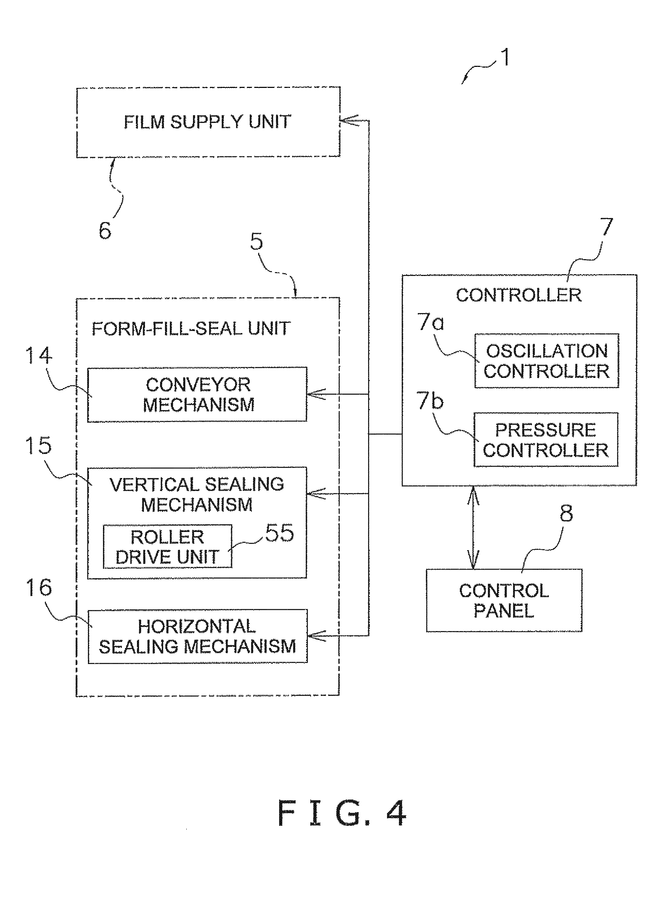

As shown in FIG. 8, the vertical sealing mechanism 15 has an oscillator 50, an anvil 51, an air cylinder 52 for reciprocatingly moving the oscillator 50, an air jet 53, a roller 54, and a roller drive unit 55 for rotating the roller 54 (see FIG. 4).

The oscillator 50 has a piezoelectric element 50a, a horn 50b, and a booster 50c. The horn 50b and the piezoelectric element 50a are disposed in that order in a substantially horizontal direction from the rear surface toward the front surface. The air cylinder 52 is disposed immediately above the booster 50c and the piezoelectric element 50a. The piezoelectric element 50a is connected to a high frequency power source not shown in the drawing. The high frequency power source applies a high frequency voltage to the piezoelectric element 50a, thereby generating ultrasonic waves. The horn 50b amplifies the ultrasonic waves generated by the piezoelectric element 50a. The booster 50c amplifies the ultrasonic waves generated by the piezoelectric element 50a, and also plays a role in supporting the oscillator 50 unit. The behavior of the oscillator 50 is controlled by the controller 7 (more specifically, by an oscillation controller 7a described below).

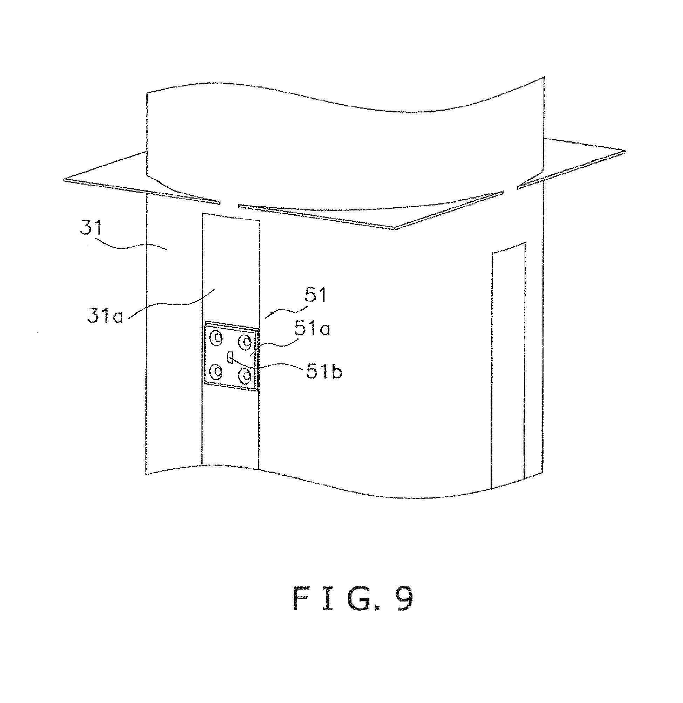

As shown in FIG. 9, the anvil 51 is fixed to the tube 31 so as to project to the front from the flat surface 31a of the tube 31. The anvil 51 is made of metal. The anvil 51 has a plate 51a that is substantially square as viewed from the front, and a protuberance 51b protruding to the front from the center of the plate 51a. The anvil 51 is non-movable. The protuberance 51b is disposed opposing the horn 50b. The overlapping portions of the cylindrical film Fc are sandwiched between the horn 50b and the anvil 51 and conveyed in a substantially perpendicular downward direction. While passing between the horn 50b and the anvil 51, the overlapping portions of the cylindrical film Fc are fused by the oscillation of the ultrasonic waves propagated from the horn 50b, and ultrasonically sealed in the vertical direction. A vertical seal section V1 is thereby formed in the center of the front surface of the cylindrical film Fc.

The anvil 51 is screwed onto the vicinity of the upper end of the flat surface 31a of the tube 31. The anvil 51 is attachable and detachable from the tube 31. It is therefore possible to exchange only the anvil 51, and not the tube 31, even when the anvil 51 is abraded.

The air cylinder 52 reciprocatingly moves the oscillator 50 in a substantially horizontal direction with respect to the anvil 51. The air cylinder 52 thereby pressurizes the horn 50b against the overlapping portions of the cylindrical film Fc and the anvil 51. The air cylinder 52 is controlled by the controller 7 (more specifically, by a pressure controller 7b described below).

The air jet 53 is disposed immediately underneath the oscillator 50; i.e., immediately downstream of the oscillator 50 and the anvil 51 in the advancing direction of the cylindrical film Fc. The air jet 53 fires air from an air jet hole. The air is fired toward the overlapping portions of the cylindrical film Fc immediately after the portions have passed the horn 50b and the anvil 51. The cooling and hardening of the overlapping portions of the cylindrical film Fc, which was heated and melted by the ultrasonic waves from the horn 50b, is thereby promoted. The amount of air fired from the air jet 53 and the timing thereof is controlled by the controller 7.

The roller 54 is disposed immediately underneath the air jet 53; i.e., immediately downstream of the air jet 53 in the advancing direction of the cylindrical film Fc. While rotating in the advancing direction of the cylindrical film Fc, the roller 54 holds down the overlapping portions of the cylindrical film Fc against the flat surface 31 a of the tube 31. This operation of the roller 54 imparts a substantially downward-directed force to the cylindrical film Fc immediately after the film has passed the horn 50b, anvil 51, and air jet 53. Meanwhile, as described above, pressure caused by friction is applied to the film F in the vicinity of the folding-back section 35 of the sailor collar-shaped unit 32. After being folded back by the folding-back section 35, the film F is conveyed straight in the substantially perpendicular downward direction until it reaches the roller 54. The overlapping portions of the cylindrical film Fc are thereby pulled substantially vertically before and after being ultrasonically sealed. This pulling force prevents the overlapping portions of the cylindrical film Fc extending in the vertical direction from opening horizontally before and after the ultrasonic seal is formed.

The rotation of the roller 54 in the advancing direction of the cylindrical film Fc prevents excessive friction from being applied to the overlapping portions of the cylindrical film Fc. The cylindrical film Fc is thereby smoothly conveyed without being damaged.

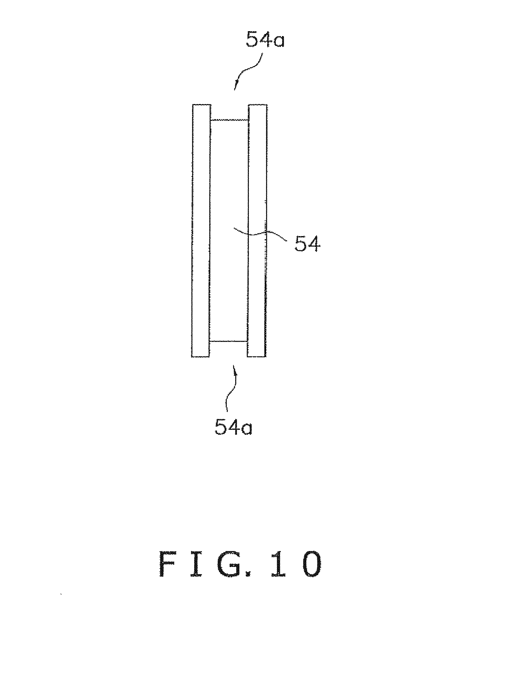

As shown in FIG. 10, an indentation 54a is formed along the entire periphery of the roller 54 on the outer peripheral surface of the roller 54. The roller 54 has a first diameter and the indentation 54a has a second diameter that is smaller than the first diameter. The width of the indentation 54a (width in the thickness direction of the roller 54) is approximately equal to the width in the horizontal direction of the overlapping portions of the cylindrical film Fc. The ultrasonically sealed portion of the overlapping portions of the cylindrical film Fc therefore recedes into the indentation 54a, and does not contact the outer peripheral surface of the roller 54. Thus, the vertically sealed portion of the cylindrical film Fc does not stretch and become deformed due to pressure from the roller 54 and the flat surface 31a of the tube 31 before sufficiently cooling and hardening. The strength of the vertical seal is thereby sufficiently maintained.

The roller drive unit 55 has a motor for rotatably driving the roller 54. The roller drive unit 55 is controlled by the controller 7. The roller drive unit 55 rotatably drives the roller 54 so that the speed at which the cylindrical film Fc is conveyed by the roller 54 is only slightly higher than the speed at which the cylindrical film Fc is conveyed by the conveyor mechanism 14. The cylindrical film Fc is therefore conveyed more quickly in the vicinity in which it contacts the roller 54 than at other positions. A pulling force in the vertical direction is therefore reliably applied to the overlapping portions of the cylindrical film Fc along the periphery of the roller 54. In other words, a situation in which the overlapping portions of the cylindrical film Fc open horizontally before or after being ultrasonically sealed is more reliably prevented.

### (2-2-4) Horizontal sealing mechanism

As shown in FIG. 3, the horizontal sealing mechanism 16 has a pair of front and rear sealing jaws 60, 60 and a drive device (not shown) for driving the sealing jaws 60, 60. The sealing jaws 60, 60 are disposed symmetrically before and behind the cylindrical film Fc. The sealing jaws 60, 60 each extend in the horizontal direction. The sealing jaws 60, 60 each have an oscillator and an anvil apiece. The oscillator and the anvil each extend in the horizontal direction.

The sealing jaws 60, 60 revolve in a D shape as seen from the left or the right synchronously with each other, and symmetrically draw near to and away from the front and rear of the cylindrical film Fc. The oscillator and anvil attached to one sealing jaw 60 are disposed substantially 180° apart with respect to the rotational center of the sealing jaw 60. When positioned closest to each other, the sealing jaws 60, 60 sandwich the cylindrical film Fc between the horn of the oscillator attached to one sealing jaw 60 and the anvil attached to the other sealing jaw 60. The portion of the cylindrical film Fc sandwiched between the horn and anvil of the sealing jaws 60, 60 is ultrasonically sealed in the left and right direction. One sandwiching operation simultaneously forms a horizontal seal section H1 on the upper part of a leading pillow bag B1 and a horizontal seal section H2 on the lower part of a pillow bag B1 manufactured thereafter. One sealing jaw 60 has an embedded cutter. The cutter cuts the cylindrical film Fc in the left and right directions while the cylindrical film Fc is sandwiched between the sealing jaws 60, 60. A pillow bag B1 is thereby cut off.

### (2-2-5) Hinge fixing mechanism 17

The hinge fixing mechanism 17 fixes a longitudinal seal structure to the body frame 10. The longitudinal seal structure is a structure including the primary part of the vertical sealing mechanism 15. More specifically, the longitudinal seal structure is formed by those constituent elements of the vertical sealing mechanism 15 other than the anvil 51. The longitudinal seal structure is constituted by the constituent elements thereof being appropriately fixed.

The hinge fixing mechanism 17 includes a frame case 17a, a frame base 17b and a variety of hinges. Although not shown, the frame base 17b is supported by the body frame 10. The frame case 17a is supported by the frame base 17b. The hinges include at least a first hinge 171 and a second hinge 172. The frame case 17a and the frame base 17b partially accommodate the longitudinal seal structure, as described further below. The longitudinal seal structure is fixed by screws or the like to the frame base 17b. The longitudinal seal structure is freely attachable and detachable as a whole with respect to the frame base 17b. The first hinge 171 is vertically positioned between the frame case 17a and the frame base 17b such that the frame case 17a is pivotal relative to the frame base 17b about a pivot axis A. More specifically, the opening and closing of the first hinge 17 causes the frame case 17a to rotate in a horizontal direction about the pivot axis A. In FIGS. 6A and 6B, the frame case 17a is shown in an open position, exposing the longitudinal seal structure. Although not shown, the frame case 17a can be moved to a closed position at least partially covering the longitudinal seal structure. When the frame case 17a is rotated to an open position as shown in FIGS 6A and 6B, the frame case 17a is moved away from the longitudinal seal structure exposing the horn 50a and the air cylinder 52. The second hinge 172 is vertically oriented between the frame base 17b and the body frame 10 (not shown). Hence, the frame base 17a is supported on the body frame 10 by the second hinge 172. As described further below, when the clamp fixing mechanism 18 is unclamped and the frame base 17b is rotated about a pivot axis B defined by the second hinge 172 (as shown in FIG. 6B), the longitudinal seal structure can be moved with respect to the tube 31 without the height thereof changing. By adjusting the degree to which the hinges 171 and 172 are opened or closed, a user can adjust the relative positions of the horn 50b of the oscillator 50 included in the longitudinal seal structure and can access the anvil 51 fixed to the tube 31. Though not shown in the drawing, the hinge fixing mechanism 17 has a fixture for maintaining the degree to which the hinges are opened or closed after being adjusted.

### (2-2-6) Clamp fixing mechanism 18

The clamp fixing mechanism 18 releasably attaches or clamps a forming structure and the longitudinal seal structure to one another. The forming structure is a structure formed from the shaping mechanism 13 and the anvil 51. The forming structure is constituted by the constituent elements thereof being appropriately fixed. The forming structure is attachable and detachable as a whole with respect to the body frame 10. Such attachment and detachment is performed by sliding the shaft forming a part of the body frame 10 along the sliding rails 36b, 36b forming a part of the forming structure.

The clamp fixing mechanism 18 has a claw-shaped hook 18a, a round hook 18b, and a lever 18c. As shown in FIG. 8, the claw-shaped hook 18a is fixed to the center of the front surface of the plate member 36 of the support frame 33 included in the forming structure. The round hook 18b is fixed to the longitudinal seal structure. When the lever 18c is tightened with the round hook 18b hooked on the claw-shaped hook 18a, the relative positions of the forming structure and the longitudinal seal structure are fixed. In other words, by using the clamp fixing mechanism 18, it is possible to fix the relative positions of the horn 50b of the oscillator 50 included in the longitudinal seal structure and the anvil 51 fixed to the tube 31. FIG. 6A shows the clamp fixing mechanism 18 in a clamped orientation with the longitudinal seal structure fixed to the forming structure. FIG. 6B shows the clamp fixing mechanism 18 in an unclamped orientation such that the longitudinal seal structure is moved away from the forming structure allowing access to the anvil 51. When the clamp fixing mechanism 18 is in the clamped orientation, the oscillator 50 is maintained in proper alignment with the anvil 51 on the tube 31.

The clamp fixing mechanism 18 couples or fixes the relative positions of the forming structure fixed by the hinge fixing mechanism 17 and the longitudinal seal structure so as to reinforce the same. The hinge fixing mechanism 17 maintains the relative positions of the forming structure and the longitudinal seal structure primarily so as not to change in the horizontal direction. In other words, the hinge fixing mechanism 17 allows the longitudinal seal structure to pivot about the vertical axis B thereby maintaining the relative vertical relationship between the longitudinal seal structure and the forming structure. More specifically, the hinge fixing mechanism 17 is configured such that the oscillator 50 is maintained at the same height as the anvil 51 on the tube 31. The clamp fixing mechanism 18 fixes or clamps the forming structure and the longitudinal seal structure together during operation of the form-fill-seal machine 1. More specifically, the clamp fixing mechanism 18 fixes or clamps the longitudinal seal structure to the plate member 36 of the support frame 33 primarily so as not to change in the vertical direction the position of the oscillator 50 relative to the anvil 51. The relative positions of the horn 50b of the oscillator 50 and the anvil 51 are therefore appropriately maintained by the hinge fixing mechanism 17 and the clamp fixing mechanism 18.

When the forming structure and the longitudinal seal structure are coupled to one another in the fixed positions by the hinge fixing mechanism 17 and the clamp fixing mechanism 18, the air cylinder 52 moves the oscillator 50 in a direction from the horn 50b substantially toward the anvil 51 and applies pressure to the cylindrical film Fc. In other words, the longitudinal seal structure permits the oscillator 50 to move in a direction from the horn 50b substantially toward the anvil 51. Meanwhile, when the forming structure and the longitudinal seal structure are coupled to one another in the fixed position by the hinge fixing mechanism 17 and the clamp fixing mechanism 18, the oscillator 50 is fixed with respect to directions other than the direction from the horn 50b substantially toward the anvil 51. In other words, the longitudinal seal structure supports the oscillator 50 so that the oscillator 50 cannot move in a direction other than from the horn 50b substantially toward the anvil 51.

### (3) Controller

The controller 7 has a CPU, ROM, RAM, and flash memory. The controller 7 controls the operation of the various parts of the form-fill-seal machine 1 by loading and executing a program stored in the flash memory. As shown in FIG. 4, the controller 7 functions as an oscillation controller 7a and a pressure controller 7b. The controller 7 is connected to the film supply unit 6, the conveyor mechanism 14, the vertical sealing mechanism 15, the horizontal sealing mechanism 16, and the operation panel 8. The controller 7 is also connected to the combination scale 2.

The oscillation controller 7a controls the high frequency power source, thereby controlling the attributes of the ultrasonic waves generated by the oscillator 50 (including number of oscillations, amplitude, and ultrasonic waves generation timing). The oscillation controller 7a changes the amplitude of the ultrasonic waves according to the speed at which the cylindrical film Fc is conveyed by the conveyor mechanism 14. More specifically, the oscillation controller 7a increases the amplitude of the ultrasonic waves the faster the speed at which the cylindrical film Fc is conveyed by the conveyor mechanism 14.

The pressure controller 7b controls the air cylinder 52, thereby changing the pressure applied by the horn 50b to the cylindrical film Fc and the anvil 51, according to the speed at which the cylindrical film Fc is conveyed by the conveyor mechanism 14. More specifically, the pressure controller 7b increases the pressure applied by the horn 50b to the cylindrical film Fc and the anvil 51 the faster the speed at which the cylindrical film Fc is conveyed by the conveyor mechanism 14.

When the conveying speed of the conveyor mechanism 14 is low, the cylindrical film Fc passes the vicinity of the oscillator 50 slowly, and quickly when the conveying speed is high. In other words, the conveying speed of the conveyor mechanism 14 affects the strength of the longitudinal seal. In this embodiment, the amplitude of the ultrasonic waves is controlled according to the conveying speed of the conveyor mechanism 14. The amplitude of the ultrasonic waves is a factor affecting the strength of the longitudinal seal. In this embodiment, the pressure applied by the horn 50b to the cylindrical film Fc and the anvil 51 is controlled according to the conveying speed of the conveyor mechanism 14. It is therefore possible to control variations in the strength of the longitudinal seal regardless of changes in the conveying speed of the conveyor mechanism 14.

### (4) Operation of the form-fill-seal machine

When the conveyor mechanism 14 and film roll 6a are driven, the sheet-shaped film F is reeled off of the film roll 6a. After being reeled off of the film roll 6a, the sheet-shaped film F arrives at the shaping mechanism 13. The shaping mechanism 13 shapes the sheet-shaped film F into a cylindrical film Fc. At this point, the left and right edges of the sheet-shaped film F overlap in the vertical direction.

Next, the cylindrical film Fc having the vertically overlapping portions descends along the tube 31 toward the vertical sealing mechanism 15. The vertical sealing mechanism 15 ultrasonically seals the portions of the cylindrical film Fc overlapping in the vertical direction, thereby forming the vertical seal section V1.

Next, the cylindrical film Fc having the vertical seal section V1 descends out of the tube 31 toward the horizontal sealing mechanism 16. At a timing coinciding therewith, contents C drop from the combination scale 2 through the interior of the tube 31 toward the interior of the cylindrical film Fc. The controller 7 commands a controller (not shown) of the combination scale 2 to drop the contents C at an appropriate timing. The horizontal sealing mechanism 16 ultrasonically seals the cylindrical film Fc in the left and right directions at a predetermined position with the cylindrical film Fc filled with the contents C. At the same time, the horizontal sealing mechanism 16 cuts the periphery of the ultrasonically sealed portion of the cylindrical film Fc in the left and right directions. A pillow bag B1 is thereby cut off from the cylindrical film Fc.

### (5) Characteristics

### (5-1)

In the embodiment above, the clamp fixing mechanism 18 fixes the forming structure having the anvil 51 and the vertical seal structure having the oscillator 50 in alignment with one another. The relative positions of the oscillator 50 and the anvil 51 are therefore properly maintained.

### (5-2)

In the embodiment above, the hinge fixing mechanism 17 fixes the vertical seal structure having the oscillator 50 to the body frame 10. The clamp fixing mechanism 18 reinforces the fixing of the relative positions of the forming structure and the vertical seal structure by the hinge fixing mechanism 17. The relative positions of the oscillator 50 and the anvil 51 are therefore more properly maintained.

### (5-3)

In the above embodiment, changes in the relative positions of the oscillator 50 and the anvil 51 are permissible with respect to the direction from the oscillator 50 substantially toward the anvil 51. Meanwhile, the relative positions of the oscillator and the anvil are properly fixed with respect to directions other than the direction from the oscillator 50 substantially toward the anvil 51.

### (6) Modifications

An embodiment of the present invention was described above, but the present invention is not limited to this embodiment; various modifications within the scope of the invention are possible. For instance, modifications such as the followings are possible.

### (6-1)

In the embodiment above, an example of manufacturing a pillow bag B1 is described, but the present invention can also be applied to other types of bags, such as square-shaped bags, flat-bottomed bags, hem seal bags, or the like.

### (6-2)

In the embodiment above, the components of the clamp fixing mechanism 18 are separately disposed on the vertical seal structure and the forming structure. However, the components of the clamp fixing mechanism 18 may also be disposed on only one of the vertical seal structure and the forming structure. For example, a hook disposed on the vertical seal structure can be made to catch onto the support frame 33 itself of the forming structure, thereby fixing the vertical seal structure and the forming structure in position relative to one another.

### (6-3)

In the embodiment above, the vertical sealing mechanism 15 creates the vertical seal primarily using the oscillator 50 and the anvil 51 through melting by ultrasonic waves, but the present invention is not limited to this. For example, the vertical sealing mechanism 15 can be a mechanism wherein the overlapping portions of the cylindrical film Fc wrapped around the tube 31 are pressed to the tube 31 at a constant pressure while being heated to form a vertical seal. More specifically, it is preferable that there be a heater positioned on the front side of the tube 31, a heater belt heated by the heater and contacting the overlapping portions of the cylindrical film Fc, and a drive unit for drawing the heater belt near to and away from the tube 31. Because the heater belt heats the overlapping portions of the cylindrical film Fc while pressing the film Fc to the tube 31 at a constant pressure, a packaging-material-receiving member having heat resistance for receiving the overlapping portions of the cylindrical film Fc is necessary on the tube 31.

### (6-4)

The vertical sealing mechanism 15 may be of a laser melting format. For example, the cylindrical film Fc is shaped from a laser light-absorbing resin film, and at least the front side of the overlapping portions is made transparent so that laser light can penetrate. A laser irradiator then irradiates the transparent side with laser light, so that the laser light-absorbing resin film absorbs the laser light and is generates heat, causing the overlapping portions to melt and bond together. A packaging-material-receiving member having heat resistance for receiving the overlapping portions of the cylindrical film Fc is necessary on the tube 31.

## Claims

1. A form-fill-seal machine comprising:
a support frame;
a cylindrical part fixed to the support frame;
a sailor collar-shaped unit for wrapping a sheet-shaped packaging material on the cylindrical part so that edges thereof overlap defining overlapping portions, the sailor collar-shaped unit being fixed to the support frame;
a first structure having a packaging-material-receiving unit fixed to the cylindrical part;
a second structure having an energy supply unit for imparting oscillatory, thermal, or light energy to the overlapping portions of the packaging material as the packaging material is conveyed through a space bounded on one side by the packaging-material-receiving unit in order to seal the overlapping portions in a vertical direction; and
a first fixing mechanism for releasably coupling the first structure to the second structure in fixed positions relative to one another.

2. The form-fill-seal machine according to claim 1, wherein:
the packaging-material-receiving unit includes an anvil; and
the energy supply unit is an oscillator for generating ultrasonic waves.

3. The form-fill-seal machine according to claim 1 or 2, further comprising:
a body frame; and
a second fixing mechanism for fixing the second structure to the body frame.

4. The form-fill-seal machine according to any one of claims 1 to 3, wherein:
the oscillator is capable of moving in a direction toward the anvil in a state where the first structure and the second structure are coupled in the fixed positions by the first fixing mechanism.

5. The form-fill-seal machine according to any one of claims 1 to 4, wherein:
the oscillator is fixed with respect to a direction other than the direction from the oscillator substantially toward the anvil in a state where the first structure and the second structure are coupled in the fixed positions by the first fixing mechanism.

6. The form-fill-seal machine according to any one of claims 1 to 5, wherein:
the first fixing mechanism has a fixing implement connected to at least one of the first structure and the second structure.

7. The form-fill-seal machine according to any one of claims 1 to 6, wherein:
the packaging-material-receiving unit is a heat resistant member; and
the energy supply unit is a heater for heating the overlapping portions of the packaging material.

8. The form-fill-seal machine according to any one of claims 1 to 7, wherein
the packaging-material-receiving unit is a heat resistant member; and
the energy supply unit is a laser irradiator for irradiating the overlapping portions of the packaging material using a laser.

9. The form-fill-seal machine according to any one of claims 1 to 8, wherein:
the oscillator is fixed with respect to the anvil in a state where the first structure and the second structure are coupled in the fixed positions by the first fixing mechanism.

10. The form-fill-seal machine according to any one of claims 1 to 9, wherein:
the first structure and the second structure are movably coupled to one for pivotal movement about a vertically oriented axis, and
the first fixing mechanism includes a clamping mechanism that clamps the first structure to the second structure.

11. The form-fill-seal machine according to any one of claims 1 to 10, wherein:
the first structure and the second structure are configured and arranged to maintain at least a portion of the energy supply unit at horizontal level that is aligned with the anvil with the first fixing mechanism clamping the first structure to the second structure.
